# EUROPÄISCHE PATENTSCHRIFT

(11) **EP 3 402 436 B1**
(45) Veröffentlichungstag und Bekanntmachung des Hinweises auf die Patenterteilung: **03.03.2021**
(21) Anmeldenummer: 17700336.5
(22) Anmeldetag: 12.01.2017
(51) Int. Cl.: A61C 5/62, B05C 1/00

(54) **MIKRO-APPLIKATOR MIT SOLLBRUCHSTELLE ZUR VERWENDUNG MIT DENTALEN FLUIDEN**
MICRO-APPLICATOR WITH PREDETERMINED BREAKING POINT FOR USE WITH DENTAL FLUIDS
MICRO-APPLICATEUR À POINT DE RUPTURE À UTILISER AVEC DES FLUIDES DENTAIRES

(30) Priorität: 13.01.2016 DE 102016100518
(43) Veröffentlichungstag der Anmeldung: 21.11.2018
(73) Patentinhaber: Kulzer GmbH, 63450 Hanau (DE)
(72) Erfinder: SUFFEL, Ralf, 58239 Schwerte (DE); KASTRATI, Astrit, 61206 Wöllstadt (DE)
(74) Vertreter: Bendele, Tanja
(86) Internationale Anmeldenummer: PCT/EP2017/050535
(87) Internationale Veröffentlichungsnummer: WO 2017/121782

(56) Entgegenhaltungen:
- WO-A1-2015/160553
- JP-A- 2002 191 622
- US-A1- 2004 197 730
- US-A1- 2011 056 984
- US-B2- 6 685 013

## Beschreibung

Die Erfindung betrifft dentale Mikro-Applikatoren mit einem zumindest teilweise hohlen Körper umfassend ein Reservoir zur Aufnahme eines Fluides, wie einer Flüssigkeit oder Paste, wobei der Körper einen distalen und einen proximalen Bereich aufweist, wobei der proximale Bereich ein hohles Applikationsmittel am proximalen Ende hat und das Reservoir am proximalen Ende oder in Richtung auf das proximale Ende, eine Sollbruchstelle aufweist. Die Sollbruchstelle kann aus einer Membran innerhalb eines flexiblen Übergangsbereichs gebildet werden.

Zur Verbesserung der Haftung dentaler Materialien an Zähnen sind vielfältige Bondings-/ und Primer-Kombinationen bekannt. Die Haftmittel der jüngeren Generation umfassen einkomponentige, selbstätzende Haftmittel. Um eine gute Haftung auf dem Zahn zu gewährleisten, muss eine große, gut benetzbare Haftfläche bereitgestellt werden. Das Adhäsiv selbst muss dünnflüssig sein, gute benetzende Eigenschaften aufweisen und sehr schnell aushärten, um die Möglichkeit eines Kontaktes mit Feuchtigkeit, mit der Folge einer verminderten Haftung, zu minimieren.

So sind selbstätzende Adhäsive bekannt, die die Schritte der Säureätzung und des anschließenden Applizierens des Adhäsivs, in einem Schritt zusammenfassen. Das säurehaltige Adhäsivsystem löst die Schmierschicht auf und legt das darunterliegende Dentin frei oder löst die Schmierschicht lediglich an, um diese permeabel für Inhaltsstoffe des Adhäsivs zu machen. Simultan erfolgt eine Infiltration der Monomere in die Zahnhartsubstanz. Im Falle des Schmelzes, wird durch die säurehaltigen Adhäsivsysteme ein der Phosphorsäureätzung ähnliches Ätzmuster erzeugt. Das zur Infiltration notwendige Lösungsmittel wird mit einem Luftpüster entfernt und das Adhäsiv wird gehärtet, bspw. strahlengehärtet. Analog werden Desensibilisierugsmittel auf dem Zahn oder in Zahnkavitäten angewendet.

Des Weiteren sind Einkomponenten-Applikatoren bekannt, die im Körper des Applikators ein Reservoir aufweisen, das durchgängig bis zum Applikationsmittel am proximalen Ende des Körpers reicht, wie in der US6059570 oder US6585511B2. Alternative Applikatoren offenbart die WO2004/087002A1 an dessen distalem Ende ein Reservoir vorgesehen ist, das eine Flüssigkeit enthält. Dieses Reservoir wird abgebrochen und das proximale Ende des Applikators mit dem Applikationsmittel kann für die Applikation der Flüssigkeit in das Reservoir eingetaucht werden. US7040893B2 offenbart ebenfalls Applikatoren mit einem Reservoir und einem Austragskanal, die miteinander kommunizieren und ein gemeinsames Lumen bilden. DE102004022046A1 offenbart ebenfalls eine Einzeldosis-Verpackung umfassend ein Reservoir, das mit dem Austragskanal kommuniziert, indem es einen Lumen bildet. Allein durch Drücken des Behälters wird die Flüssigkeit aus dem Reservoir ausgetragen. Nachteilig an den genannten Applikatoren des Standes der Technik ist, dass das Reservoir direkt mit dem Austragskanal kommuniziert und so die Flüssigkeit unbeabsichtigt aus dem Applikator austreten kann oder in der Flüssigkeit enthaltende volatile Lösemittel entweichen können, sofern die Applikatorspitze nicht separat mit einem Verschluss abgedichtet wird.

DE102007058924B4 offenbart einen Applikator mit einem separaten Reservoir in dem die zu applizierende Flüssigkeit enthalten ist. EP1336386A1 offenbart eine Single-Dose Verpackung für Flüssigkeiten mit einer Karte, mit einer Sollknicklinie, einem Flüssigkeitsbehälter an der Unterseite im Bereich der Sollknicklinie sowie einem an der Karte angebrachten Applikator, der durch das Knicken in die Flüssigkeit eingetaucht wird. Auch US20030168358A1 offenbart eine knickbare Karte, die in einem Reservoir die dentale Flüssigkeit enthält sowie einen separaten Applikator. Allen Applikatoren gemeinsam ist, dass zur Aktivierung des Applikators der Einsatz beider Hände notwendig ist, um die Verschlusskappe zu entfernen oder ein Reservoir oder einen Deckel eines Reservoirs abzubrechen und aufzustellen. DE102011009187A1 offenbart einen einhändig bedienbaren Applikator umfassend ein Reservoir, das durch eine Folie vom Austragskanal getrennt ist. Diese Folie kann mit einem Dorn durch axiales Zusammenschieben des Applikators durchstoßen werden

Ein weiterer Applikator ist aus US 6685013B2 bekannt.

Es besteht ein Bedarf an Applikatoren, die mit einer Hand aktiviert werden können und direkt einsatzbereit sind. Daher bestand die Aufgabe der vorliegenden Erfindung darin, einen Applikator zu entwickeln, der mit nur einer Hand aus dem Lagerzustand in eine Form überführt werden kann, in der der Applikator direkt verwendet werden kann und ein Fluid appliziert werden kann.

Gelöst wird die Aufgabe mit einem dentalen Mikro-Applikator nach Anspruch 1. Bevorzugte Ausführungsformen sind in den Unteransprüchen sowie detailliert in der Beschreibung offenbart.

Gegenstand der Erfindung ist ein dentaler Mikro-Applikator mit zumindest einem teilweise hohlen Körper, umfassend ein Reservoir zur Aufnahme eines Fluides, wie einer Flüssigkeit oder einer Paste, wobei der zumindest teilweise hohle Körper, einen distalen und einen proximalen Bereich, mit einem hohlen Applikationsmittel am proximalen Ende aufweist, wobei das Reservoir am proximalen Ende oder in Richtung auf das proximale Ende eine Sollbruchstelle aufweist.

Nach einer offenbarten Ausführungsform eines Applikators weist der Applikator ein Reservoir auf, das a) in einem hohlen Körper im distalen Bereich angeordnet ist, wobei die Sollbruchstelle durch eine Membran gebildet wird, die innen in einem flexiblen Übergangsbereich zwischen dem distalen Bereich und dem proximalen Bereich des hohlen Körpers vorgesehen ist, oder b) das Reservoir ist im hohlen proximalen Bereich im zumindest teilweise hohlen Körper angeordnet und die Sollbruchstelle ist am proximalen Ende des Applikationsmittels ausgebildet.

Entsprechend einer Ausführungsform kann ein Mikro-Applikator einen Körper mit einem distalen und einem proximalen Bereich aufweisen, wobei im proximalen Bereich ein Applikationsmittel vorgesehen sein kann und vorzugsweise am distalen Ende des distalen Bereiches ein Griffelement oder Griffende angeordnet werden kann. Das proximale Ende des proximalen Bereiches wird definiert als der Bereich des dentalen Mikro-Applikators, der zur Applikation eines Fluides auf einer Zahnoberfläche eines Patienten ausgebildet ist. An den distalen Bereich des dentalen Mikro-Applikators kann ein Griffelement angeordnet sein oder angeordnet werden.

Gemäß der Alternative a) bildet der Hohlraum im hohlen Körper im distalen Bereich das Reservoir aus, während der hohle Körper im proximalen Bereich einen Kanal aufweist.

Nach offenbarten Ausführungsformen von Applikatoren, kann der Applikator beispielsweise als Sollbruchstelle umfassen a) i) eine Membran die im flexiblen Übergangsbereich angeordnet ist und zerstörbar ist, wenn der proximale und/oder der distale Bereich aus der axialen Lage des Körpers des Applikators geneigt wird, d.h. wenn der Körper im flexiblen Übergangsbereich gebogen wird, insbesondere wenn der proximale und/oder der distale Bereich um größer 10°, insbesondere 30° aus der axialen Lage geneigt werden, oder ii) der flexible Übergangsbereich zwischen dem proximalen und distalen Bereich entspricht einem Faltenbalg oder der flexible Übergangsbereich ist um mindestens 10%, insbesondere um 25% entlang der Längsachse des Körpers des Applikators dehnbar, wobei durch ein Dehnen des flexiblen Übergangsbereiches entlang der Längsachse, die Membran zerstörbar ist und/oder
b) das Reservoir ist im Körper, im hohlen proximalen Bereich, im hohlen Applikationsmittel angeordnet und die Sollbruchstelle ist am proximalen Ende des Applikationsmittels angeordnet, wobei die Sollbruchstelle durch Erhöhung des Innendrucks im Reservoir zerstörbar ist. Der Innendruck kann dabei beispielsweise erhöht werden, indem das Applikationsmittel mit der Sollbruchstelle auf eine Oberfläche gestoßen wird oder auch indem das Applikationsmittel zusammengedrückt wird.

Das hohle Applikationsmittel kann als separates Formteil, beispielsweise mittels eines US- oder Rotationsschweißverfahrens an den distalen Bereich des Körpers zur Herstellung des Applikators angeschweißt werden, wie beispielsweise mittels Laserschweißen.

Ferner offenbart ist ein Applikator, bei dem die Materialstärke der Sollbruchstelle der Alternative b) gegenüber der Materialstärke der Wand des hohlen Applikationsmittels am proximalen Ende des Applikationsmittels vermindert ist, insbesondere weist die Sollbruchstelle eine Kerbe auf.

Der zumindest teilweise hohle Körper, das hohle Applikationsmittel und/oder die Sollbruchstelle des erfindungsgemäßen Applikators, sind vorzugsweise aus einem inerten Polymer gebildet. Bevorzugt sind thermoplastische Polymere umfassend Cyclo-Olefin-Polymeren (COP), PE, PP, HDPE, LDPE, poröses expandiertes Polypropylen (PEPP) und/oder expandiertes Polypropylen (EPP). Cyclo-Olefin-Polymere sind besonders bevorzugte Polymere als Material zur Herstellung der hohlen Bestandteile des Applikators, die das Reservoir oder auch den Kanal bilden und mit den dentalen Fluiden in Kontakt stehen. Das Applikationsmittel, insbesondere die daran angebrachten Filamente etc. sind bevorzugt aus einem flexiblen und vorzugweise inerten Material, das weiter bevorzugt, gut mit dentalen Materialien benetzbar ist.

Nach einer bevorzugten Alternative ist das Reservoir des Applikators mit einer Dentalflüssigkeit oder einer dentalen Paste gefüllt. Besonders bevorzugt ist das Reservoir mit einem selbstätzenden Dentaladhäsiv gefüllt.

Um das Auftragen und/oder Verteilen des Fluides zu erleichtern, weist das hohle Applikationsmittel des Applikators vorzugsweise am proximalen Ende des Körpers mindestens ein Filament, Bürste, Schwamm, Beflockung, Kamm, Knäul, Pinsel, Spatel, Mischpad und/oder poröses Mittel auf. Dabei kann das Applikationsmittel besonders bevorzugt eine Vielzahl an Filamenten aufweisen.

Entsprechend einer Ausführungsform kann ein Mikro-Applikator einen Körper mit einem distalen und einem proximalen Ende aufweisen, wobei an dem proximalen Ende ein Applikationsmittel vorgesehen ist und vorzugsweise an dem distalen Ende ein Griffelement oder Griffende vorgesehen ist.

Gleichfalls offenbart ist ein Kit umfassend mindestens einen a) Applikator enthaltend im Reservoir eine dentale Flüssigkeit oder eine dentale Paste, insbesondere ein dentales Adhäsiv, wobei der mindestens eine Applikator b) in einer lichtundurchlässigen Verpackung enthalten ist.

Ebenfalls Gegenstand der Erfindung ist das Öffnen mindestens eines erfindungsgemäßen Applikators, wobei die Sollbruchstelle des mit einer dentalen Flüssigkeit oder dentalen Paste gefüllten Reservoirs zerstört wird, indem der a) flexible Übergangsbereich entlang der Längsachse des zumindest teilweise hohlen Körpers i) gedehnt und/oder ii) gebogen wird, indem i) der proximale und der distale Bereich auseinandergezogen werden und sich der flexible Übergangsbereich dehnt oder ii) der proximale und der distale Bereich werden aus der axialen Lage des Körpers des Applikators geneigt, wobei die Sollbruchstelle zerstört wird oder b) die Sollbruchstelle wird zerstört, indem das hohle und flexible Applikationsmittel umfassend das Reservoir zusammengedrückt wird, bspw. durch aufstoßen auf eine Oberfläche, wodurch der Innendruck im Reservoir ansteigt und die Sollbruchstelle zerstört wird und/oder an der Sollbruchstelle äußerer Druck ausgeübt wird, bis die Sollbruchstelle zerstört wird.

Gleichfalls Gegenstand der Offenbarung ist die Verwendung des Applikators zur Aufbringung eines polymerisierbaren dentalen Adhäsivs, wie vorzugsweise iBOND® Self Etch, auf eine Dentalfläche.

Abhängig von der Stabilität der dentalen Fluide werden die Applikatoren einzeln oder zusammen luftdicht und/oder lichtgeschützt verpackt. Bevorzugt werden die Applikatoren in einer vor Licht schützenden und/oder luftdichten Folie geblistert etc.

Gleichfalls Gegenstand der Erfindung ist ein Applikator und/oder ein Kit umfassend einen a) Applikator mit einem dentalen Adhäsiv als dentales Fluid im Reservoir, insbesondere ein radikalisch polymerisierbares dentales Adhäsiv.

Nachfolgend wird die Erfindung anhand von Beispielen näher erläutert, ohne sie auf die Beispiele zu beschränken:

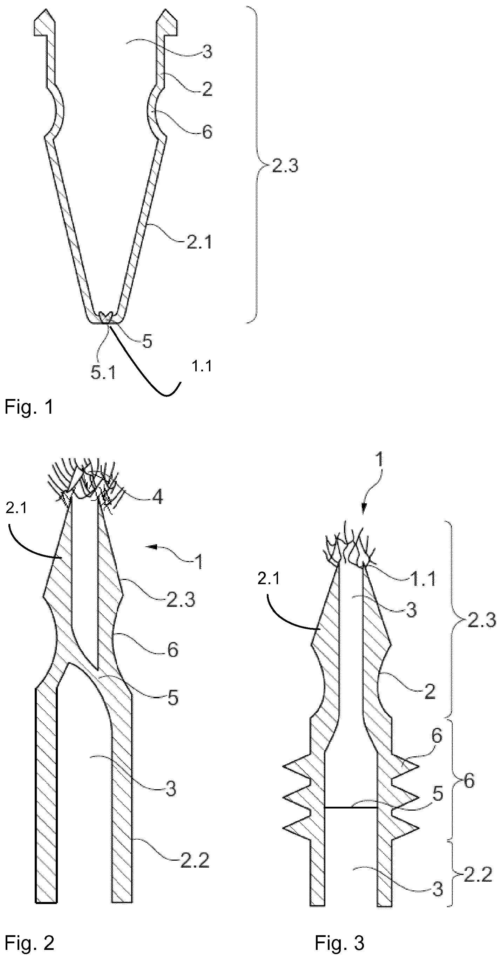

**Figur 1** zeigt einen Bestandteil zur Herstellung eines erfindungsgemäßen Applikators **1,** in dem das Reservoir **3** im hohlen proximalen Bereich **2.1** des zumindest teilweise hohlen Körpers **2,** von dem der distale Bereich oben an den oberen Bereich des Reservoirs **3** noch angeschweißt wird, dargestellt ist. Die Sollbruchstelle **5** ist am proximalen Ende **1.1** des Applikationsmittels als Kerbe **5.1** dargestellt. Der flexible Übergangsbereich **6** kann mit den Fingern eingedrückt werden, um den Innendruck im hergestellten Applikator **1** bis zum Bersten der Sollbruchstelle zu erhöhen.
**Figur 2** zeigt einen nicht erfindungsgemäßen dentalen Mikro-Applikator 1 mit einem hohlen Körper **2** umfassend ein Reservoir **3** zur Aufnahme eines Fluides, wobei der hohle Körper **2** einen hohlen distalen **2.2** und einen proximalen Bereich **2.1,** mit einem hohlen Applikationsmittel **2.3** am proximalen Ende aufweist. Das Reservoir **3** weist in Richtung auf das proximale Ende **1.1** eine Sollbruchstelle **5,** in Form einer Membran auf, die durch Zusammendrücken, Verbiegen und/oder Abknicken des flexiblen Übergangsbereiches **6** zum Bersten gebracht werden kann. Am proximalen Ende sind Filamente **4** angeordnet.
**Figur 3** stellt einen erfindungsgemäßen Applikator **1** dar, an dessen proximalen Ende **1.1** Filamente **4** angeordnet sind. Das hohle Applikationsmittel **2.3** ist im proximalen Bereich **2.1** des Körpers **2** angeordnet. Der flexible Übergangsbereich **6** liegt in Form eines Faltenbalges vor. Durch Dehnen des Faltenbalges entlang der Längsachse des Körpers kann die Membran, die die Sollbruchstelle **5** bildet, zerrissen werden. Durch das Besten oder Zerreißen der Sollbruchstelle oder Membran, kann das dentale Fluid aus dem Reservoir **3** austreten und mithilfe des Applikationsmittels auf eine Zahnoberfläche aufgetragen werden. Die Bedienung der erfindungsgemäßen Applikatoren, d.h. das Öffnen und Auftragen des Fluides kann einhändig erfolgen. So kann der biegsame Applikator beispielsweise distal gegriffen werden und der Übergangsbereich geknickt werden, indem der proximale Bereich gegen eine Oberfläche gedrückt wird. Ein analoges Prinzip ist von fluoreszierenden Bändern bekannt, die durch Knicken aktiviert werden können.

## Patentansprüche

1. Dentaler Mikro-Applikator (1) mit einem zumindest teilweise hohlen Körper (2) umfassend ein Reservoir (3) zur Aufnahme eines Fluides, wobei der zumindest teilweise hohle Körper (2) einen distalen (2.2) und einen proximalen Bereich (2.1) mit einem hohlen Applikationsmittel (2.3) am proximalen Ende (1.1) und einen flexiblen Übergangsbereich (6) aufweist, wobei das Reservoir (3) am proximalen Ende (1.1) oder in Richtung auf das proximale Ende (1.1) eine Sollbruchstelle (5) aufweist, und wobei das Reservoir (3) in einem hohlen Körper (2) im distalen Bereich (2.2) angeordnet ist und die Sollbruchstelle (5) durch eine Membran gebildet wird, die innen in dem flexiblen Übergangsbereich (6) zwischen dem distalen Bereich (2.2) und dem proximalen Bereich (2.1) vorgesehen ist, und der proximale (2.1) und der distale Bereich (2.2) über den flexiblen Übergangsbereich (6) miteinander verbunden sind, **dadurch gekennzeichnet, dass** der flexible Übergangsbereich (6) einem Faltenbalg entspricht, wobei durch ein Dehnen des flexiblen Übergangsbereiches (6) entlang der Längsachse, die Membran (5) zerstörbar ist.

2. Applikator nach Anspruch 1, **dadurch gekennzeichnet, dass** der hohle Körper (2), das hohle Applikationsmittel (2.3) und/oder die Sollbruchstelle (5) aus einem inerten Polymer gebildet sind, insbesondere einem thermoplastischen Polymer umfassend Cyclo-Olefin-Polymere (COP), PE, PP, HDPE, LDPE, poröses expandiertes Polypropylen (PEPP) und/oder expandiertes Polypropylen (EPP).

3. Applikator nach Anspruch 1 oder 2, **dadurch gekennzeichnet, dass** das Reservoir (3) mit einer Dentalflüssigkeit oder einer dentalen Paste gefüllt ist, insbesondere mit einem selbstätzenden Dentaladhäsiv.

4. Applikator nach einem der Ansprüche 1 bis 3, **dadurch gekennzeichnet, dass** das hohle Applikationsmittel (2.3) am proximalen Ende (1.1) des Körpers (2) mindestens ein Filament, Bürste, Schwamm, Beflockung, Kamm, Knäuel, Pinsel, Spatel, Mischpad und/oder poröses Mittel (4) umfasst.

5. Kit umfassend mindestens einen a) Applikator nach einem der Ansprüche 1 bis 4 mit einer dentalen Flüssigkeit oder Paste, insbesondere einem dentalen Adhäsiv im Reservoir (3), wobei der mindestens eine Applikator b) in einer lichtundurchlässigen Verpackung enthalten ist.

6. Öffnen mindestens eines Applikators nach einem der Ansprüche 1 bis 4, **dadurch gekennzeichnet, dass** die Sollbruchstelle (5) des mit einer dentalen Flüssigkeit oder dentalen Paste gefüllten Reservoirs (3) zerstört wird, indem der flexible Übergangsbereich (6) entlang der Längsachse des hohlen Körpers (2) gedehnt wird, indem der proximale (2.1) und der distale Bereich (2.2) auseinandergezogen werden, wobei der flexible Übergangsbereich (6) gedehnt wird.

## Claims

1. Dental micro-applicator (1) having an at least partially hollow body (2) comprising a reservoir (3) for receiving a fluid, the at least partially hollow body (2) having a distal (2.2) and a proximal region (2.1) having a hollow application means (2.3) at the proximal end (1.1) and a flexible transition region (6), the reservoir (3) having a predetermined breaking point (5) at the proximal end (1.1) or in the direction to the proximal end (1.1), and the reservoir (3) being arranged in a hollow body (2) in the distal region (2.2) and the predetermined breaking point (5) being formed by a membrane that is provided inside the flexible transition region (6) between the distal region (2.2) and the proximal region (2.1), and the proximal (2.1) and the distal region (2.2) are interconnected via the flexible transition region (6), **characterised in that** the flexible transition region (6) corresponds to a bellows, the membrane (5) being destroyable through stretching the flexible transition region (6) along the longitudinal axis.

2. Applicator according to claim 1, **characterised in that** the hollow body (2), the hollow application means (2.3) and/or the predetermined breaking point (5) are made of an inert polymer, in particular a thermoplastic polymer comprising cyclic olefin polymers (COP), PE, PP, HDPE, LDPE, porous expanded polypropylene (PEPP) and/or expanded polypropylene (EPP).

3. Applicator according to claim 1 or 2, **characterised in that** the reservoir (3) is filled with a dental liquid or a dental paste, in particular with a self-etching dental adhesive.

4. Applicator according to any one of the claims 1 to 3, **characterised in that** the hollow application means (2.3) at the proximal end (1.1) of the body (2) comprises at least one filament, brush, sponge, flocking, comb, clew, paintbrush, spatula, mixing pad and/or porous means (4).

5. Kit comprising at least one a) applicator according to any one of the claims 1 to 4 having a dental liquid or paste, in particular a dental adhesive in the reservoir (3), the at least one applicator b) being contained in a lightproof packing.

6. Opening at least one applicator according to any one of the claims 1 to 4, **characterised in that** the predetermined breaking point (5) of the reservoir (3) filled with a dental liquid or dental paste is destroyed by stretching the flexible transition region (6) along the longitudinal axis of the hollow body (2) by pulling apart the proximal (2.1) and the distal region (2.2), the flexible transition region (6) being stretched.

## Revendications

1. Micro-applicateur dentaire (1) ayant un corps creux au moins partiellement (2) comprenant un réservoir (3) pour recevoir un fluide, le corps creux au moins partiellement (2) ayant une région distale (2.2) et proximale (2.1) ayant un moyen d'application creux (2.3) à l'extrémité proximale (1.1) et une région transitoire flexible (6), le réservoir (3) ayant un point de rupture (5) à l'extrémité proximale (1.1) ou en direction à l'extrémité proximale (1.1), et le réservoir (3) étant arrangé dans un corps creux (2) dans la région distale (2.2) et le point de rupture (5) étant formé par une membrane qui est fournie à l'intérieur de la région transitoire flexible (6) entre la région distale (2.2) et la région proximale (2.1), et la région proximale (2.1) et distale (2.2) sont interconnectées via la région transitoire flexible (6), **caractérisé en ce que** la région transitoire flexible (6) correspond à un soufflet, la membrane (5) étant destructible par étirer la région transitoire flexible (6) le long de l'axe longitudinal.

2. Applicateur selon la revendication 1, **caractérisée en ce que** le corps creux (2), le moyen d'application creux (2.3) et/ou le point de rupture (5) sont faits d'un polymère inerte, en particulière un polymère thermoplastique comprenant des polymères d'oléfines cyclique (COP), PE, PP, HDPE, LDPE, le polypropylène expansé poreux (PEPP) et/ou le polypropylène expansé (EPP).

3. Applicateur selon la revendication 1 ou 2, **caractérisé en ce que** le réservoir (3) est rempli d'un liquide dentaire ou d'une pâte dentaire, en particulière d'un adhésive dentaire au-mordançant.

4. Applicateur selon l'une des revendications 1 à 3, **caractérisée en ce que** le moyen d'application creux (2.3) à l'extrémité proximale (1.1) du corps (2) comprend au moins un/e filament, brosse, éponge, flocage, peigne, pelote, pinceau, spatule, bloc de mélange et/ou moyen poreux (4).

5. Kit comprenant au moins un a) applicateur selon l'une des revendications 1 à 4 ayant un liquide dentaire ou une pâte dentaire, en particulière un adhésive dentaire dans le réservoir (3), l'au moins un applicateur b) étant contenu dans un emballage imperméable à la lumière.

6. Ouvrir au moins un applicateur selon l'une des revendications 1 à 4, **caractérisée en ce que** le point de rupture (5) du réservoir (3) rempli d'un liquide dentaire ou d'une pâte dentaire est détruit par étirer la région transitoire flexible (6) le long de l'axe longitudinal d'u corps creux (2) par détirer la région proximale (2.1) et distale (2.2), la région transitoire flexible (6) étant étirée.
